# EUROPEAN PATENT APPLICATION

(11) **EP 4 844 285 A1**
(43) Date of publication of application: **25.11.2026**
(21) Application number: 25177189.5
(22) Date of filing: 19.05.2025
(51) Int. Cl.: F24D 3/10, F16K 11/22, F24D 19/10

(54) **INTEGRATED VALVE ARRANGEMENT FOR A FLOOR HEATING**

(71) Applicant: Danfoss A/S, 6430 Nordborg (DK)
(72) Inventor: CLAUSEN, Anders Ostergaard, 8680 Ry (DK); HANSEN, Thomas Bruun, 8370 Hadsten (DK)
(74) Representative: Nestler, Jan Hendrik

(57) **Abstract**

The invention relates to an integrated valve arrangement (1) for a heat supply circuit (2) and/or a cooling supply circuit. The integrated valve arrangement (1) comprises a common housing (3). The common housing (3) comprises a hot fluid inlet orifice (6), a cold fluid outlet orifice (8), a mixed fluid outlet orifice (7) and a return fluid orifice (9). The integrated valve arrangement (1) further comprises a differential pressure maintaining valve arrangement (10), a unidirectional valve arrangement (11) and a fluid throughput control valve (12). The common housing (3) comprises two housing sub-units (4, 5).

## Description

The invention relates to an integrated valve arrangement for a heat supply circuit and/or a cooling supply circuit. The invention further relates to a heat supply circuit and/or a cooling supply circuit, comprising at least an integrated valve arrangement.

Heating systems are essentially a must for room heating in many geographical regions of the world (for example temperate zones or latitudes that are somewhat close or even beyond the polar circle), as well as for house water supply systems (hot tap water and water for showers etc.). Since such water heating systems or room heating systems require a significant amount of energy, there is always a thrive to optimise the system so as to save energy and/or to reduce the environmental impact of the respective heating system and/or to reduce the fatigue of the components of the heating system due to thermal effects. Furthermore, in the case of house water supply systems, by mixing a high-temperature to a preferred temperature, scalding can be avoided.

One approach to deal with various problems is to use a different temperature level for the heating device (for example a gas boiler or an oil boiler) on one hand, and the circuit with the water taps, the heat radiators or the tubes/hoses of a floor heating system on the other hand. A possible way to realise such different temperature levels is to mix the heat transporting liquid (usually water, possibly with some additives for standard applications) of the heater circuit, running through the heating device and the returning fluid of the radiator circuit, after having served the radiators/floor heating/water taps and the like.

A typical technical realisation of such a heat supply arrangement comprises a high-temperature heater circuit, comprising a heating source (heater), a differential pressure controller, a common fluid tube (in common with the low temperature heat delivering circuit, as explained in the following), and a heating control valve (that might be designed as an actuated heating control valve and/or as a temperature-dependent control valve). It is to be noted that the heating device quite often comprises a fluid pump.

The heat delivering circuit on the other hand comprises the radiators, another fluid pump and again the common fluid hose/tube.

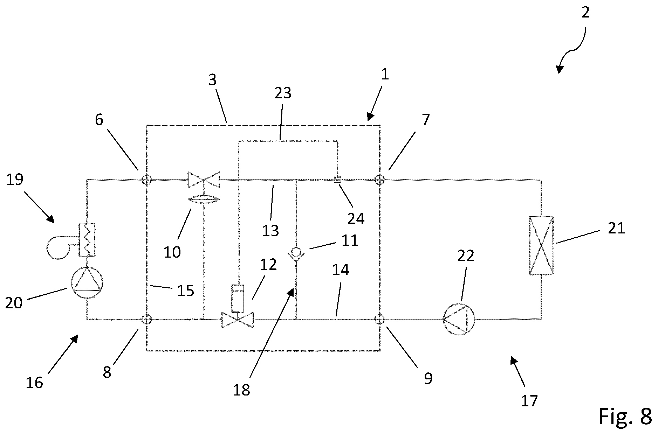

To avoid a short-circuiting of the heater circuit, a unidirectional valve (check valve or the like) is arranged within the common fluid tube/hose. The basic setup of this arrangement can be seen in Fig. 8.

It is to be noted that the use of such a two-temperature level heating circuit is legally required in Denmark at the moment. The idea is that the temperature in the heat delivery circuit (and hence in the radiators) should reflect somewhat the outside temperature. This way, the energy efficiency of the heat supply arrangement can be increased. Due to the promising functionality of this design set up, it is quite likely that a legal requirement will come up in different jurisdictions as well.

As it is always the case, there's always a desire to decrease the overall cost of a technical arrangement, to decrease the possibility for failures (both during operation and also during installation), to reduce the cost of installation, and to reduce the volume of the arrangement. Heat supply systems do not make an exception.

Consequently, various improvements for certain parts of two temperature-level heating systems have been proposed in the prior art. As an example, Chinese utility model CN 204301171 U suggests a floor heating water mixing system that comprises a room temperature controller, a pressure control mechanism, a water pump, an actuator and a water flow mechanism. According to the therein disclosed suggestion, a temperature control mixing valve and an electric ball valve are designed as an integrated unit. However, the remaining components are provided as separate components that have to be connected to each other during installation at the destination site.

Chinese utility model CN 202812303 U discloses another floor heating water mixing system. The therein disclosed suggestion comprises a design where a lot of initially separately delivered components have to be connected to each other at the destination site.

It is obvious that the solutions, as they are known in the prior art, still show certain deficiencies, although they admittedly work decently well in practice.

It is therefore an object of the present invention to suggest an integrated valve arrangement for a heat supply circuit and/or a cooling supply circuit that is improved over integrated valve arrangements for heat supply circuits and/or cooling supply circuits, as they are known in the state of the art.

It is another object of the present invention to suggest a heat supply circuit and/or a cooling supply circuit, comprising at least an integral valve arrangement, that is improved over heat supply circuits and/or cooling supply circuits comprising integrated valve arrangements, as they are known in the prior art.

The presently suggested integrated valve arrangement for a heat supply circuit and/or a cooling supply circuit, and the presently suggested heat supply circuit and/or a cooling supply circuit, comprising at least an integrated valve arrangement, solve least one of these objects, respectively.

An integrated valve arrangement for a heat supply circuit and/or a cooling supply circuit is suggested, wherein the integrated valve arrangement comprises a common housing, wherein the common housing comprises a hot fluid inlet orifice, a cold fluid outlet orifice, a mixed fluid outlet orifice and a return fluid orifice, and wherein the integrated valve arrangement further comprises a differential pressure maintaining valve arrangement, a unidirectional valve arrangement and a fluid throughput control valve.

The heat supply circuit and/or a cooling supply circuit typically comprises two fluid (sub-)circuits that show two different temperature levels. For brevity, in the context of this application, reference will widely be made to a heat supply circuit, only. Nevertheless, a cooling supply system is always implicitly included. It is to be noted that in case a cooling supply circuit is in question (as opposed to a heat supply circuit), usually appropriate amendments to the various notions will be necessary. As an example, in case of a cooling supply system, typically the "hot fluid inlet orifice" has to be replaced by a "cold fluid inlet orifice", and so on. However, the amendments are obvious to a person skilled in the art. Even further, the circuit may be used alternatively as a heat supply circuit and a cooling supply circuit, depending on the current conditions.

A first fluid sub-circuit (heater circuit) shows a first, elevated temperature level and typically comprises a heating device, like a burner (gas burner, oil burner), a thermal solar heating device, a geothermal device, a heat pump, or any other device, as they are known in the state of the art as such. In this heater sub-circuit, the outflow temperature of the heating device is typically of a comparatively high temperature level (just to name some examples for using water as a thermal transfer transporting fluid: 70°, 80° or 90° might be envisaged).

On the other hand, the heat supply circuit typically comprises a second (sub-)circuit (thermal delivery circuit/heat delivering circuit) that typically shows a lower temperature level. The second (sub-)circuit may comprise thermal transfer units/thermal dispenser units/heat emitting units/heat dispensing units, like radiators, tubes/hoses of a floor heating system, but also (hot) water taps, shower taps, bathtub taps and the like.

The two (sub-)circuits are usually not fluidly separated from each other. Instead, the thermal energy transporting fluid is typically mixed between the two sub-circuits. It is to be noted that the high thermal level of the first sub-circuit/heat generating circuit/heater circuit is present only at the higher temperature side thereof (as compared to the second, thermal delivery circuit/heat delivery circuit, comprising the radiators or the like; in particular as compared to the higher temperature side of the heat delivery circuit).

When looking at the lower temperature side of the respective sub-circuits, the situation is typically reversed, i.e. the lower temperature side of the heater sub-circuit is typically at a lower temperature level than the temperature at the lower side of the heat delivering sub-circuit (return fluid line thereof). However, in practice the temperature difference on the lower temperature side of the heater sub-circuit and the heat delivering sub-circuit is typically quite small.

The housing is presently suggested to be a common housing. When talking about a housing, this usually does not mean that a cuboid shape (or any other more or less "clean" geometrical shape, like a cylinder or the like) is necessarily present. Rather, the common housing may be reduced to its functionality. Hence, when thinking about fluid conduits, the housing may resemble an assembly of interconnected tube sections, or the like. Additionally, the common housing may show some protrusions, which may be present due to the required functionality. For example, a fluid throughput control valve may be provided with a handle, a thermostat, a thermally operated actuator, an electrically operated actuator or the like. Similarly, the differential pressure maintaining valve arrangement may show a membrane chamber part that protrudes from a tube section, or the like. Such protruding devices generally do not resemble a tube.

For completeness, it should be mentioned that the presently used notations of a hot fluid inlet orifice, a cold fluid outlet orifice, a mixed fluid outlet orifice and a return fluid orifice are possibly only clearly defined, if the integrated valve arrangement is used in its intended way, in particular in its intended way in connection with a heat supply circuit. Hence, different notations might be used as well (irrespective of an integrated valve arrangement for a heat supply circuit). For example, one might talk about a first fluid orifice, a second fluid orifice, a third fluid orifice and a fourth fluid orifice. In particular in case of a cooling supply circuit, the temperature-related terms may be amended appropriately (replacing hot (hot fluid inlet orifice, to give an example) by cold (cold fluid inlet orifice, to give an example), and so on).

Further for completeness, it should be mentioned that as a fluid, various types of fluids may be used. This includes gases, mixtures of gases and liquids, liquids or even fluids in a supercritical state, where no difference between fluid and gas exists anymore. Typically, however, for standard applications the fluid will be water, and possibly water containing some additives.

The differential pressure maintaining valve arrangement may be of any type, as known in the prior art. In particular, it may be of an actively controlled type (comprising, for example, an electric actuator, where the actuator is actuated by means of a controller or the like) or - typically preferred - of a passive/mechanically operated type, where a pressure difference between two fluid ports will actuate the orifice part of the differential pressure maintaining valve arrangement. In particular, a valve device, usually comprising a valve seat and a valve poppet, where the valve seat and the valve poppet may be moved relative to each other, and where the movable part of the respective valve is actuated by a membrane, might be advantageously used. On both sides of the membrane, a different pressure may be applied/present. For this, fluid conduits may be extending from the different pressure chambers on both sides of the membrane, fluidly connecting those pressure chambers to different parts/conduits, in particular to different fluid channels (in the context of the present disclosure, for example to the first fluid channel and the second fluid channel).

The unidirectional valve arrangement may also be of any type as known in the prior art. Preferably, however, the unidirectional valve arrangement may be of a passive type (although actively operated types are possible as well). A passive functionality may be realised by a valve poppet and a corresponding valve seat, where the valve poppet is biased towards its closed position by a spring of the like. Then, if a pressure difference occurs across the unidirectional valve arrangement in an appropriate direction, the valve poppet will overcome the biasing force of the spring and will open the unidirectional valve arrangement. It is to be noted that this opening behaviour is usually only present in one direction (hence "unidirectional" valve arrangement). Only for completeness, one could also talk about a single directional valve, a check valve, a direction dependent valve, a single-direction valve, or the like.

Even further, the fluid throughput control valve may be of an actuator operated type (for example using an electrically operated actuator, a temperature-dependent actuator, in particular a thermostat-type actuator), but also of a hand operated type. Even a combination of a manual operation and an actuator-driven operation is possible, where, as an example, a hand operated handle may override an actuator or the like.

Using the suggested integration of various components into an integrated valve arrangement, a surprisingly large number of improvements can be realised at the same time. As an example, first experiments and model calculations have shown that the production cost of the integrated valve arrangement can be reduced quite significantly, as opposed to the use of individual components. Cost reductions of some 20% seem to be realistic. Furthermore, the overall weight of the integrated valve arrangement can be reduced, as compared to the use of separate components (usually due to material savings; which has an influence on the lower cost as well). First experiments show that some 30% weight reduction seems to be realistic. Even further, the volume requirements of the integrated valve arrangement, as opposed to the use of individual components, can be reduced as well. This is a great advantage for household appliances, where space is always quite sparse. First experiments show that some 25% of volume reduction is realistically achievable. Even further, due to the reduced number of interconnections, the risk of assembly errors and leakages (due to installation or maintenance, but also during operation) can be reduced quite significantly. Even further, due to the fewer connections to be made, installation cost may be reduced as well.

Yet further it is suggested to design and arrange the integrated valve arrangement in a way that the common housing comprises two housing sub-units. Preferably, the common housing essentially consists of two housing sub-units. In particular in the latter case, as a (sub-)housing, only parts that mainly serve the purpose of a limiting containment between the inside and the outside of the respective part may be counted. Furthermore, the respective sub-units/sub-housings should usually have a distinct extent and/or should serve as a housing with "limiting walls" in different directions. This typically results in a profound concave-like shape of the respective part. Hence, a closing plate or the like is usually not to be considered as a housing sub-unit. The same applies for a valve that may be screwed into an opening of a housing (sub-unit), using corresponding threads. Using the proposed design, a very good compromise between reducing the number of parts (sub-units) and easy production/machining of the respective parts (sub-units) may be achieved. In particular, a single piece common housing for the presently proposed integrated valve arrangement is usually not realistically achievable by using standard material removing techniques. Hence, additive manufacturing techniques had to be used, which are usually comparatively slow and expensive. On the other hand, using a number of (exactly/at least) two housing sub-units, the respective sub-units (or at least one of them) can be easily produced using standard subtractive machining techniques, like drilling, milling, cutting, grinding and the like, so that a fast throughput and low cost can usually be achieved. The two sub-units may typically be shipped to the consumer as separate parts. Usually, however, it is preferred if the two subunits will already be assembled to form a common housing, right at the production facility of the integrated valve arrangement.

Yet further, it is suggested to design and arrange the integrated valve arrangement in a way that a first housing sub-unit comprises the cold fluid outlet orifice and the return fluid orifice. Additionally or alternatively, the integrated valve arrangement may be designed and arranged in a way that the first housing sub-unit comprises a first fluid channel, wherein the first fluid channel is preferably defined by the cold fluid outlet orifice and the return fluid orifice. By the notion "defined", it is particularly meant that the respective fluid channel will (fluidly) (inter-)connect the respective orifices (where it is not excluded that some valves or similar parts are arranged in the respective fluid channel and/or additional fluid channels may branch off the fluid channel, sideline the fluid channel or the like).

In particular, it is suggested to design and arrange the integrated valve arrangement in a way that a second housing sub-unit comprises the hot fluid inlet orifice in the mixed fluid outlet orifice. Additionally or alternatively, it is proposed to design and arrange the integrated valve arrangement in a way that the second housing sub-unit comprises a second fluid channel, wherein the second fluid channel is preferably defined by the hot fluid inlet orifice and the mixed fluid outlet orifice. What has been said previously about the "defined" may apply mutatis mutandis to the present fluid channel as well.

**In** any case, using the present suggestion(s), the split-up of the common housing into (two) housing sub-units is usually done in a way that an essentially optimum fluid flow can be realised. Furthermore, irrespective of this, functional units (in particular differential pressure maintaining valve arrangement, unidirectional valve arrangement, fluid throughput control valve) may be arranged and particularly arranged geometrically relative to each other, in a way that a particularly volume efficient overall design may be realised.

Yet further, it is suggested to design and arrange the integrated valve arrangement in a way that the first housing sub-unit comprises a feeding port and/or a sensor for the differential fluid pressure maintaining valve arrangement. Additionally or alternatively, the first housing sub-unit may comprise the unidirectional valve arrangement. Additionally or alternatively, the first housing sub-unit may comprise at least part of the fluid throughput control valve, in particular at least a valve orifice part of the fluid throughput control valve. Again, using this proposal, usually a particularly volume-efficient arrangement of the integrated valve arrangement may be realised.

Furthermore, it is suggested to design and arrange the integrated valve arrangement in a way that the second housing sub-unit comprises the valve orifice arrangement of the differential pressure maintaining valve arrangement. Additionally or alternatively, the second housing sub-unit may comprise the actuating member of the differential pressure maintaining valve arrangement. Yet again, using this proposal, typically a particularly volume efficient integrated valve arrangement may be realised.

It is to be noted that it may be advantageous as well, that some parts which are mentioned in connection with the first housing sub-unit, may be arranged in the second housing sub-unit instead (or vice versa).

Yet further it is suggested to design and arrange the integrated valve arrangement in a way that the first fluid channel and/or the first housing sub-unit on one hand and the second fluid channel and/or the second housing sub-unit on the other hand are fluidly interconnected by a feeding channel for the differential fluid pressure maintaining valve arrangement and/or are fluidly interconnected by a (unidirectional) fluid channel that comprises the unidirectional valve arrangement. Using such an arrangement (of one of those or both of those designs) will again usually result in a typically particularly volume-efficient integrated valve arrangement.

In particular, it is suggested to design and arrange the integrated valve arrangement in a way that the common housing comprises a single connecting member that connects the two sub-units and/or that comprises the feeding channel for the differential fluid pressure maintaining valve arrangement and further comprises the unidirectional (single-direction) fluid channel that comprises the unidirectional (single-direction) valve arrangement. Additionally or alternatively, it is suggested to design and arrange the integrated valve arrangement in a way that the common housing comprises at least two connecting members that connect the two sub-units and/or in a way that a first connecting member comprises the feeding channel for the differential fluid pressure maintaining valve arrangement and further in a way that a second connecting member comprises the unidirectional fluid channel that comprises the unidirectional valve arrangement. The connecting members may particularly be of a somewhat tube-like (or hose-like) design. Using at least one of the previous suggestions, a particularly volume-efficient, comparatively easy to produce and yet mechanically stable arrangement can be realised. In particular, if only a single connecting member is used, the design may be simpler and more cost efficient. If, however, at least two connecting members are provided, the integrated valve arrangement may be mechanically more stable. In particular, it may be more resilient against a relative rotational force and/or against a relative pulling force between the (at least two) housing sub-units.

Yet further, it is suggested to design and arrange the integrated valve arrangement in a way that at least one connecting member comprises a first part that is integrally connected to the first housing sub-unit and/or a second part that is integrally connected to the second housing sub-unit. Preferably, the two parts are connected to each other using at least one sealing means (in particular in a fluid tight way), in particular using at least one o-ring type sealing means. The first and second part of the respective connecting member may show some kind of a tube-like/hose-like design. In particular, near their respective ends (end (section) of the first part that is facing/connects to the corresponding end (section) of the second part), the respective part might show a tapered or stepped design (stepping/tapering with respect to the radial extent, in particular, more particular with respect to the inside and/or outside surface) that corresponds to the corresponding/neighbouring part. In other words, the first part may function as a male connector end, to interact with a functionally female end of the corresponding part of the respective connecting member. In yet other words, the respective ends may be inserted into each other/plugged together. In particular, in this case (but not limited to this case), one or a plurality of sealing(s), in particular o-ring type sealing(s), may provide a simple, cost-effective and very functional sealing effect.

Even further, it is suggested to design and arrange the integrated valve arrangement in a way that sub-parts/sub-units of the integrated valve arrangement, in particular the at least two sub-parts/sub-units of the common housing, are connected to each other by at least one fixation means. The fixation means may preferably be a reversible fixation means. In particular, the fixation means may be taken from the group, comprising threads and hairpins. Using such a design, an easy fixation of the respective (sub-)parts may be realised. However, the connection may be opened for repair or maintenance purposes. However, it might also prove to be advantageous for certain use cases, if the connection may not be opened easily, in particular without destroying (a part of) the fixation means. This way, an unauthorised tampering with the integrated valve arrangement may be hindered.

Even further, it is suggested to design and arrange the integrated valve arrangement in a way that at least part of the common housing comprises at least a metallic material, in particular a metallic material that is taken from the group, comprising brass, copper, iron, steel and stainless steel. Those materials are widely available and comparatively cheap. Furthermore, they show advantageous material properties, resulting in a particularly advantageous integrated valve arrangement. Furthermore, by choosing an appropriate metallic material, electro-corrosive effects with respect to other parts of the resulting integrated valve arrangement (and possibly the heat supply unit, the integrated valve arrangement will be used in) may be advantageously avoided.

Even further, a heat supply circuit and/or a cooling supply circuit that comprises at least an integrated valve arrangement is suggested. The heat supply circuit and/or a cooling supply circuit preferably further comprises a fluid pump, a heating device (cooling device; heat absorption device) and/or a heat radiating device (coolness radiating device). In particular, the heat supply circuit and/or a cooling supply circuit may comprise at least an integrated valve arrangement according to the present disclosure.

Further advantages, features, and objects of the invention will be apparent from the following detailed description of the invention in connection with the associated drawings, wherein the drawings show:
- Fig. 1:: a possible embodiment of an integrated valve arrangement according to the present disclosure in a top view;
- Fig. 2:: the embodiment of an integrated valve arrangement according to Fig. 1 in a cross-sectional view from above;
- Fig. 3:: a cross-sectional view through a first fluid channel of an integrated valve arrangement according to Fig. 1, as seen from the side;
- Fig. 4:: a cross-sectional view through a second fluid channel of an integrated valve arrangement according to Fig. 1, as seen from the side;
- Fig. 5:: a top view onto the integrated valve arrangement according to Fig. 1, as seen from below;
- Fig. 6:: a schematic perspective view onto the integrated valve arrangement according to Fig. 1 in an assembled state;
- Fig. 7:: a schematic perspective view onto the integrated valve arrangement according to Fig. 1 in an explosive view;
- Fig. 8:: a possible heat supply circuit in a schematic circuit diagram, in which an integrated valve arrangement according to Figs. 1-7 may be advantageously used.

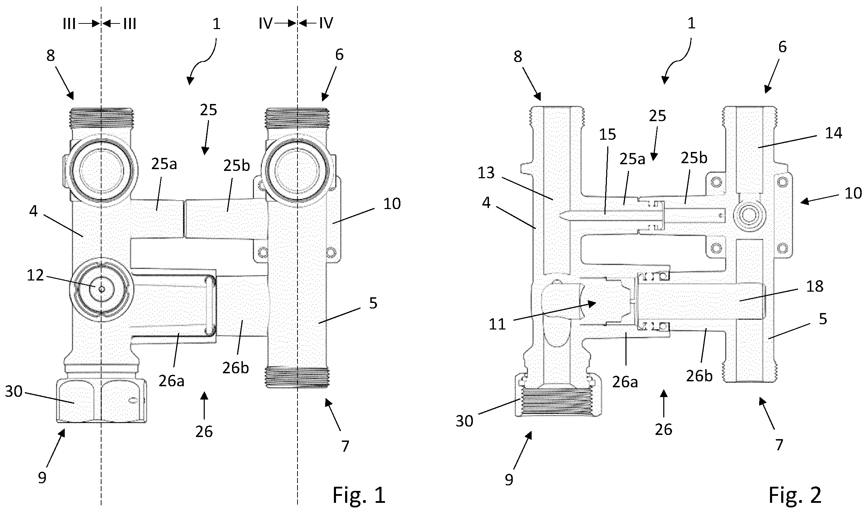

In Figs. 1 to 7, a possible embodiment of an integrated valve arrangement 1 according to the present disclosure is shown in various top, cross-sectional and perspective views.

Integrated valve arrangement 1 is intended to be used in connection with a heat supply circuit 2 (or additionally or alternatively for a cooling supply circuit - not shown). A possible heat supply circuit 2 for which the presently proposed integrated valve arrangement 1 may be used, is shown in Fig. 8 in a schematic circuit diagram. The heat supply circuit 2 essentially comprises two fluid (sub-)circuits 16, 17 namely a first, heater circuit 16 and a second, heat delivery circuit 17. The heater circuit 16 and the heat delivering circuit 17 share a common fluid line 18. As can be seen, in the common fluid line 18, a unidirectional valve 11 (presently a check valve 11) is arranged, so as to avoid a direct short-circuiting of the heater circuit 16. Nevertheless, a reflow pattern within heat delivering circuit 17 is possible.

The heater circuit 16 comprises a heater 19 that is presently designed as an oil burner or as a gas burner. To effectuate a fluid flow within heater circuit 16, a heater circuit fluid pump 20 is provided. Further, in heater circuit 16, a differential pressure maintaining valve arrangement 10, and a fluid throughput control valve 12 is arranged. The differential pressure maintaining valve arrangement 10 guarantees a certain pressure differential between cold fluid outlet orifice 8 (returning cold fluid from the heat delivery circuit 17 that is flowing back to the heater 19) and the mixed fluid port 7 after (as seen in the fluid flow direction) differential pressure maintaining valve 10 and before radiator 21. The pressure sensing feeding line 15 is indicated as a dashed line in Fig. 8.

Fluid throughput control valve 12 is presently designed as a mechanically operated variable throughput valve, where a (mechanical) thermal sensing line 23 is also indicated as a dashed line in Fig. 8. The thermal sensing line 23 has a sensing element 24 in the vicinity of the mixed fluid port 7. Depending on the temperature at this point, a higher or lower fluid reflow flux is allowed through fluid throughput control valve 12. The fluid throughput control valve 12 and the actuator thereof may be designed as a usual mechanical thermostat, as it is known in the prior art.

Heat delivery circuit 17 shows the already mentioned common fluid line 18 (comprising unidirectional valve arrangement 11), the radiator(s) 21 (only a single radiator is presently shown), and a heat delivery circuit fluid pump 22.

The arrangement of the heat supply circuit 2 is known in the prior art as such. However, so far, the various components, in particular valves 10, 11 and 12 are designed as individual components.

Presently, however, it is proposed to combine the various valves 10, 11, 12 into a single common housing 3, thus forming integrated valve arrangement 1. This is indicated in Fig. 8 as another dashed line, forming a box. As can be seen, the fluid connections 6, 7, 8, 9 between the integrated valve arrangement 1 and the external components are effectuated through hot fluid inlet orifice 6, mixed fluid outlet orifice 7, cold fluid outlet orifice 8 and return fluid orifice 9.

The mechanical setup of this integrated valve arrangement 1 is explained in detail in Figs. 1 to 7. Certainly, only one possible embodiment is shown, while various modifications of the integrated valve arrangement 1 are possible, of course.

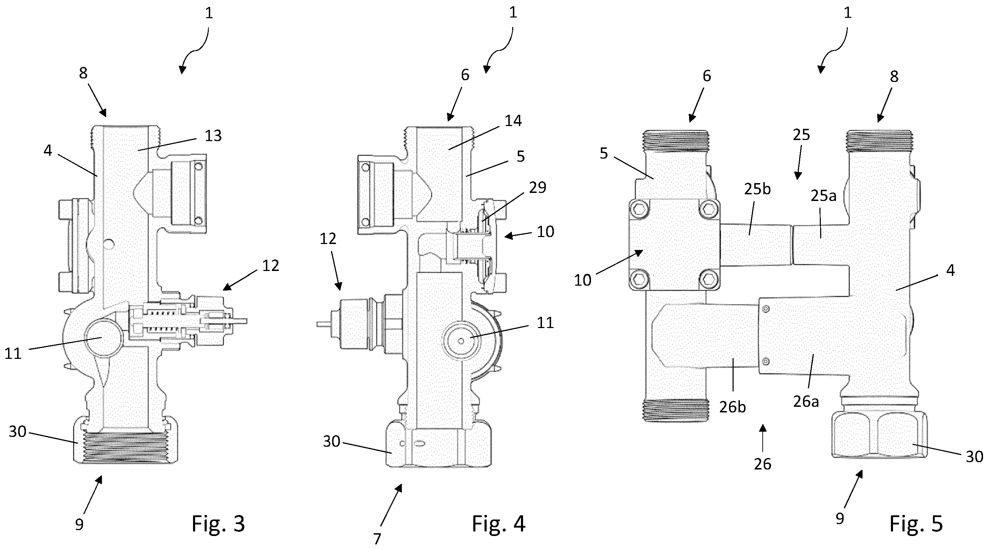

Fig. 1 shows the presently disclosed embodiment of the presently proposed integrated valve arrangement 1 in a top view from above, while Fig. 5 shows the same integrated valve arrangement 1 in a top view from below (opposite side).

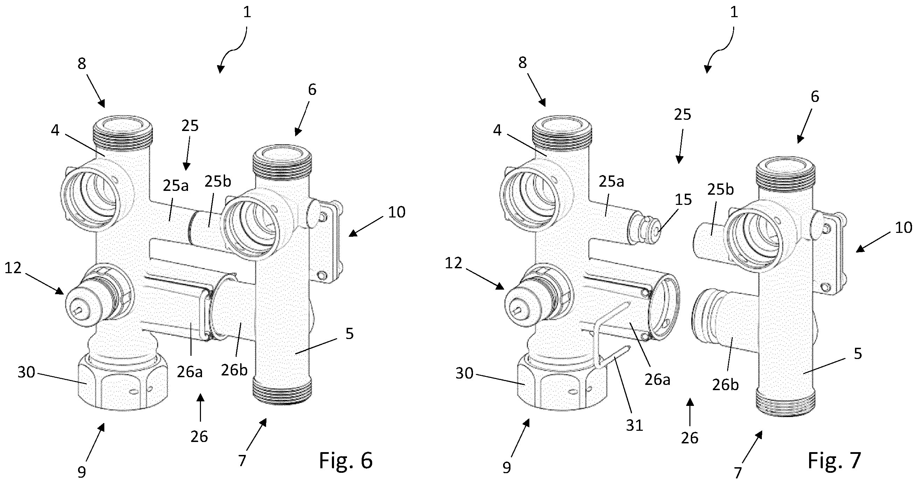

As can be seen, the integrated valve arrangement 1 comprises two housing subunits 4, 5, namely a first housing sub-unit 4 and a second housing sub-unit 5. The two housing sub-units 4, 5 are presently interconnected by two connecting members 25, 26. Each of those connecting members 25, 26 comprises respective parts 25a, 25b and 26a, 26b. The respective parts 25a, 25b, 26a, 26b of the two connecting members 25, 26 are plugged together in a male/female type plugging way (plug/socket), as will be elucidated in the following. First parts 25a, 26a of first and second connecting member 25, 26 are designed integrally with the first housing sub-unit 4, while second parts 25b, 26b of first and second connecting member 25, 26 are integrally formed with the second housing sub-unit 5 (see also perspective exploded view of Fig. 7).

First housing sub-unit 4 is limited by cold fluid outlet orifice 8 (on top in the view of Fig. 1) and return fluid orifice 9 (at the bottom in Fig. 1), the respective orifices 8, 9 defining the first fluid channel 13. First housing sub-unit 4 also comprises unidirectional valve arrangement 11 (as can be seen in the cross-sectional view of Fig. 2; the direction of the view chosen in Fig. 2 is essentially the direction of the view of Fig. 1, but it is not a top view, but instead a cross-sectional view in the drawing plane through the middle of the integrated valve arrangement 1).

Presently, the unidirectional valve arrangement 11 is arranged in the common fluid line 18, where the common fluid line 18 is arranged as a branch line of first fluid channel 13. More particularly, the unidirectional valve arrangement 11 is arranged to lie in the second connecting member 26, even more particularly in first part 26a of second connecting member 26. It is to be noted that from the fluid flow pattern perspective, the unidirectional valve arrangement 11 could also be arranged in the second part 26b of second connecting member 26. However, the overall dimensions of the integrated valve arrangement 1 can be made smaller when using the depicted design, since the comparatively large sizes of unidirectional valve 11 and differential pressure maintaining valve arrangement 10 complement each other to a certain extent. Further, it is to be noted that presently the unidirectional valve arrangement 11 is designed and arranged as a valve poppet that rests on a corresponding valve seat. The valve poppet is biased into a closed position by means of a spring (these details of the unidirectional valve arrangement 11 are not shown).

Furthermore, first housing sub-unit 4 comprises a fluid throughput control valve 12 (which is particularly well visible in the cross-sectional view through plane III-III that is shown in Fig. 3).

The fluid throughput control valve 12 is presently shown as an actuatable valve 12. The actuation can be made using a thermostat, a different type of actuator (for example an electric actuator) or even using a hand-operated handle. Presently, the fluid throughput control valve 12 shows a mechanical connection interface that is standardised, so that commonly available actuators can be connected to the corresponding interface of the fluid throughput control valve 12.

Second housing sub-unit 5 comprises at its both ends hot fluid inlet orifice 6 (top view in Fig. 1) and mixed fluid outlet orifice 7 (lower side in Fig. 1), therefore defining a second fluid channel 14 between the respective orifices 6, 7.

Second housing sub-unit 5 comprises the differential pressure maintaining valve arrangement 10. This Δ*p*-valve 10 can be particularly seen in Fig. 4, which is a cross-sectional view through plane IV-IV, as indicated in Fig. 1.

There Δ*p*-valve 10 is of a membrane-actuated type 29. Depending on the pressure difference on both sides of the membrane, the orifice member of the differential pressure maintaining valve arrangement 10 will open and close appropriately. One side of the pressure membrane 29 is connected to second fluid channel 14, while the other side of the membrane 29 is fluidly connected to the first fluid channel 13 via feeding channel 15, where the feeding channel 15 is arranged in first connecting member 25 of the integrated valve arrangement 1.

In the presently shown embodiment of the integrated valve arrangement 1, cold fluid outlet orifice 8, hot fluid inlet orifice 6 and mixed fluid outlet orifice 7 are designed as members comprising an outer thread, so that a union nut can be used for attaching the respective orifices 6, 7, 8 to an appropriate fluid conduit.

Different from this, return fluid orifice 9 presently comprises a union nut 30 with an inner thread. This way, the integrated valve arrangement 1 can be easily attached to a fluid pump 22 (presently of heat delivery circuit 17), if the respective fluid pump 22 shows a connection tube end with an outer thread (therefore similar to any one of orifices 6, 7, 8). In case a different design of fluid pump is used, or an additional intermediary hose or tube is used, a tube end with an outer thread could be used instead.

In particular by comparing the perspective views of Fig. 6 (assembled state) and Fig. 7 (disassemble state) of integrated valve arrangement 1, some more details of the connecting members 25, 26 can be seen (however, see also the cross-sectional view of Fig. 2).

As can be seen, one part 25a, 26b of the respective connection member 25, 26 shows a reduced outer diameter near its opening, while the corresponding part 25b, 26a of the respective connection member 25, 26 shows a reduced inner diameter. Therefore, the respective ends of the parts 25a, 25b and 26a, 26b can be easily pushed together as a female-male and/or plug-socket-type connection. Presently, first part 25a of first connecting member 25 and second part 26b of second connecting member 26 are of the male/plug type, while second part 25b of first connecting member 25 and first part 26a of second connecting member 26 are of the female/socket type. This mirrored arrangement shows some manufacturing advantages. However, it is certainly possible to arrange the male ends of both connecting members on the same side (and the female ends accordingly).

As can further be seen in Figs. 2 and 7, the male protrusions show one groove (first connecting member 25) and two grooves (second connecting member 26) on the radial outside of the male protrusion of respective tube part 25a, 26b of respective connecting member 25, 26. In the respective grooves, an O-ring type sealing is arranged.

Using this design, by a simple pushing-together-step, the two housing sub-units 4, 5 can be easily connected together.

After plugging the two housing sub-units 4, 5 together, in the presently shown embodiment the two housing sub-units 4, 5 are fixed in their relative position using a single hairpin fixation element 31.

It is noted that identical reference numerals are used throughout the present disclosure for parts that are sufficiently similar in design and/or in function to justify the use of identical reference numerals, although the respective parts may not be identical. This is done for brevity and to improve the understandability of the description.

It is also to be noted that a single one or a plurality of the features of one, several or all of the presently disclosed detailed embodiments may be used in combination with the generic description of the present disclosure (even across the present and the other aforementioned applications).

## Claims

1. Integrated valve arrangement (1) for a heat supply circuit (2) and/or a cooling supply circuit, comprising a common housing (3), the common housing (3) comprising a hot fluid inlet orifice (6), a cold fluid outlet orifice (8), a mixed fluid outlet orifice (7) and a return fluid orifice (9), the integrated valve arrangement (1) further comprising a differential pressure maintaining valve arrangement (10), a unidirectional valve arrangement (11) and a fluid throughput control valve (12).

2. Integrated valve arrangement (1) according to claim 1, **characterised in that** the common housing (3) comprises, preferably essentially consists of two housing sub-units (4, 5).

3. Integrated valve arrangement (1) according to any of the preceding claims, in particular according to claim 2, **characterised in that** a first housing sub-unit (4) comprises the cold fluid outlet orifice (8) and the return fluid orifice (9) and/or **characterised in that** the first housing sub-unit (4) comprises a first fluid channel (13), wherein the first fluid channel (13) is preferably defined by the cold fluid outlet orifice (8) and the return fluid orifice (9).

4. Integrated valve arrangement (1) according to any of the preceding claims, in particular according to any of claims 2 or 3, **characterised in that** a second housing sub-unit (5) comprises the hot fluid inlet orifice (6) and the mixed fluid outlet orifice (7) and/or **characterised in that** the second housing sub-unit (5) comprises a second fluid channel (14), wherein the second fluid channel (14) is preferably defined by the hot fluid inlet orifice (6) and the mixed fluid outlet orifice (7).

5. Integrated valve arrangement (1) according to any of the preceding claims, in particular according to any of claims 2 to 4, **characterized in that** the first housing sub-unit (4) comprises a feeding port (15) and/or a sensor for the differential fluid pressure maintaining valve arrangement (10) and/or the unidirectional valve arrangement (11) and/or at least part of the fluid throughput control valve (12), in particular at least a valve orifice part of the fluid throughput control valve (12).

6. Integrated valve arrangement (1) according to any of the preceding claims, in particular according to any of claims 2 to 5, **characterised in that** the second housing sub-unit (5) comprises the valve orifice arrangement of the differential pressure maintaining valve arrangement (10) and/or the actuating member (29) of the differential pressure maintaining valve arrangement (10).

7. Integrated valve arrangement (1) according to any of the preceding claims, in particular according any of claims 2 to 6, **characterised in that** the first fluid channel (13) and/or the first housing sub-unit (4) and the second fluid channel (14) and/or the second housing sub-unit (5) are fluidly interconnected by a feeding channel (15) for the differential fluid pressure maintaining valve arrangement (10) and/or by a unidirectional fluid channel (18) that comprises the unidirectional valve arrangement (11).

8. Integrated valve arrangement (1) according to any of the preceding claims, in particular according to any of claim 2 to 7, more particular according claim 7, **characterised in that** the common housing (3) comprises a single connecting member that connects the two sub-units (4, 5) and/or comprises the feeding channel (15) for the differential fluid pressure maintaining valve arrangement (10) and the unidirectional fluid channel (18) that comprises the unidirectional valve arrangement (11) and/or **characterised in that** the common housing (3) comprises at least two connecting members (25, 26) that connect the two sub-units (4, 5) and/or wherein a first connecting member (25) comprises the feeding channel (15) for the differential fluid pressure maintaining valve arrangement (10) and wherein a second connecting (26) member comprises the unidirectional fluid channel (18) that comprises the unidirectional valve arrangement (11).

9. Integrated valve arrangement (1) according to any of the preceding claims, in particular according to claim 8, **characterised in that** at least one connecting member (25, 26) comprises a first part (25a, 26a) that is integrally connected to the first housing sub-unit (4) and/or a second part (25b, 26b) that is integrally connected to the second housing sub-unit (5), wherein preferably the two parts (25a, 25b, 26a, 26b) are connected to each other using at least one sealing means, in particular at least an o-ring type sealing means.

10. Integrated valve arrangement (1) according to any of the preceding claims, in particular according to any of claims 2 to 9, more particular according to claim 9, **characterised in that** sub-units (4, 5) of the integrated valve arrangement (1), in particular the at least two sub-units (4, 5) of the common housing (3) are connected to each other by at least one fixation means (31), wherein the fixation means (31) is preferably a reversible fixation means (31), more preferably a fixation means taken from the group, comprising threads and hairpins (31).

11. Integrated valve arrangement (1)according to any of the preceding claims, **characterised in that** at least a part of the common housing (3) comprises at least a metallic material, in particular a metallic material that is taken from the group comprising brass, copper, iron, steel and stainless steel.

12. Heat supply circuit (2) and/or a cooling supply circuit comprising at least an integrated valve arrangement (1) according to any of the preceding claims, the heat supply circuit (2) and/or a cooling supply circuit preferably further comprising a fluid pump (20, 22), a heating device (19) and/or a cooling device and/or a heat radiating device (21) and/or a coolness generating device.
